**Europäisches Patentamt**

**European Patent Office**

**Office européen des brevets**

(19)

(11) Veröffentlichungsnummer : **0 423 537 B1**

(12)

# EUROPÄISCHE PATENTSCHRIFT

(45) Veröffentlichungstag der Patentschrift :
**01.03.95 Patentblatt 95/09**

(51) Int. Cl.$^6$ : **H04M 9/10**

(21) Anmeldenummer : **90118891.2**

(22) Anmeldetag : **02.10.90**

(54) **Verfahren zur automatischen Sprachrichtungsumschaltung und Schaltungsanordnung zur Durchführung des Verfahrens.**

(30) Priorität : **18.10.89 DE 3934769**

(43) Veröffentlichungstag der Anmeldung :
**24.04.91 Patentblatt 91/17**

(45) Bekanntmachung des Hinweises auf die Patenterteilung :
**01.03.95 Patentblatt 95/09**

(84) Benannte Vertragsstaaten :
**DE FR GB IT NL**

(56) Entgegenhaltungen :
**FR-A- 2 618 626**
**US-A- 4 008 375**
**US-A- 4 507 524**
**US-A- 4 542 263**

(73) Patentinhaber : **SIEMENS AKTIENGESELLSCHAFT**
**Wittelsbacherplatz 2**
**D-80333 München (DE)**

(72) Erfinder : **von Zitzewitz, Andreas, Dr.**
**Erlenstrasse 6**
**W-8091 Maitenbeth (DE)**
Erfinder : **Redl, Siegmund**
**Gebehardstrasse 16a**
**W-8069 Wolnzach (DE)**

EP 0 423 537 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur automatischen Sprachrichtungsumschaltung und eine Schaltungsanordnung zur Durchführung des Verfahrens.

Der Komfort bei Telefonapparaten ist in den letzten Jahren deutlich gestiegen. Neben Wahlwiederholung, Rufnummernspeicherung und Lauthören ist auch die Möglichkeit, frei zu sprechen, d.h. ohne Handapparat zu telefonieren, eine begehrte Funktion des Telefons geworden. Diese Funktion findet neben der Anwendung im privaten Bereich viele sinnvolle Einsatzmöglichkeiten beispielsweise im Bereich der Bürokommunikation, wie etwa bei Telefonkonferenzen, beim Einsatz in einem Autotelefon oder in allen anderen Fällen, in denen das Halten des Handapparates hinderlich ist.

Der grundsätzliche Unterschied zwischen einem normalen Telefon mit Handapparat und einem Freisprechtelefon besteht in der Betriebsweise: Ersteres arbeitet im Gegensprechbetrieb, d.h. es findet eine Übertragung in beiden Richtungen - also Senden und Empfangen - gleichzeitig statt. Beim Freisprechtelefon ist dies nur mit sehr aufwendigen und unbefriedigend arbeitenden Verfahren möglich. Wegen der hohen Signalverstärkung in beiden Richtungen würde jeder Versuch der Konversation im Gegensprechbetrieb sofort zu einem starken Rückkopplungspfeifen führen, da durch die akustische Kopplung zwischen Lautsprecher und Mikrofon eine geschlossene Schleife entsteht. Freisprechtelefone können daher nur im Wechselsprechbetrieb arbeiten, d.h. es kann immer nur einer der beiden Teilnehmer sprechen, während der andere zuhört. Um dies zu erreichen, benötigt man eine Schaltung, die feststellt, wer gerade spricht, um dann den betreffenden Kanal durchzuschalten und den anderen genügend abzuschwächen. Die Schleifenverstärkung wird somit unter Eins gehalten. Wenn die Sprecher ihre Funktion tauschen, muß die Schaltung dies sofort feststellen und die Kanäle entsprechend umschalten. Mit Hilfe einer Sprachrichtungserkennung in Verbindung mit einem elektronischen Umschalter arbeitet die Schaltung dann automatisch im Freisprechbetrieb.

Eine Schaltungsanordnung zur automatischen Sprachrichtungsumschaltung bei Telefonen ist beispielsweise aus Chandra Desai, Freisprechen ohne Rückkopplung, Elektronik 22, 30. Oktober 1987, Seite 87 ff und aus Motorola Semiconductors, Datenblatt MC 34118 bekannt.

Bei dieser in analoger Schaltungstechnik aufgebauten Schaltung wird der gerade nicht aktive Kanal gegenüber dem aktiven Kanal bedämpft. Dies führt dazu, daß der gerade Sprechende seinen Gegenüber nicht hören kann. Daneben kann auch noch ein sogenannter Idle-Zustand angesteuert werden, indem beide Kanäle mit der halben maximalen Dämpfung betrieben werden. Für den Fall, daß beide schweigen oder wenn der Sprechende durch das Geräusch am Ort des Hörers übertönt wird, wird langsam in den Idle-Zustand übergegangen (Slow Idle). Für den Fall, daß der Sprechende und der Lautsprecher etwa gleichen Pegel aufweisen, wird dagegen schnell in den Idle-Zustand übergegangen (Fast Idle).

Nachteile der bekannten Schaltung sind, daß bei gleichzeitigem Sprechen und Hören (Fast Idle) die Schleifenverstärkung nur durch zusätzliche aufwendige Maßnahmen kleiner Eins gehalten werden kann und zum anderen der insgesamt hohe Schaltungsaufwand.

Aufgabe der Erfindung ist es daher, ein Verfahren zur automatischen Sprachrichtungsumschaltung und eine Schaltungsanordnung zur Durchführung des Verfahrens anzugeben, das keinen dieser Nachteile aufweist.

Diese Aufgabe wird bei einem Verfahren und bei einer Schaltungsanordnung der eingangs genannten Art durch die kennzeichnenden Merkmale des Patentanspruches 1 gelöst. Weiterbildungen des Erfindungsgedankens sind in Unteransprüchen gekennzeichnet.

Die Erfindung wird nachfolgend anhand von den in den FIG der Zeichnung dargestellten Ausführungsbeispielen näher erläutert.

Es zeigt:

FIG 1      den prinzipiellen Verfahrensablauf anhand eines Ausführungsbeispiels einer erfindungsgemäßen Schaltungsanordnung zur Durchführung des Verfahrens in einem Blockschaltbild,

FIG 2      den durch das erfindungsgemäße Verfahren erzeugten Dämpfungsverlauf in einem Diagramm,

FIG 3      den erfindungsgemäßen Verfahrensablauf zur Unterscheidung von Sprache und Geräusch anhand eines Ausführungsbeispiels einer Schaltungsanordnung zur Durchführung des Verfahrens in einem Blockschaltbild, und

FIG 4      eine bevorzugte Ausführungsform eines Tiefpasses bei einer Schaltungsanordnung zur Durchführung des erfindungsgemäßen Verfahrens.

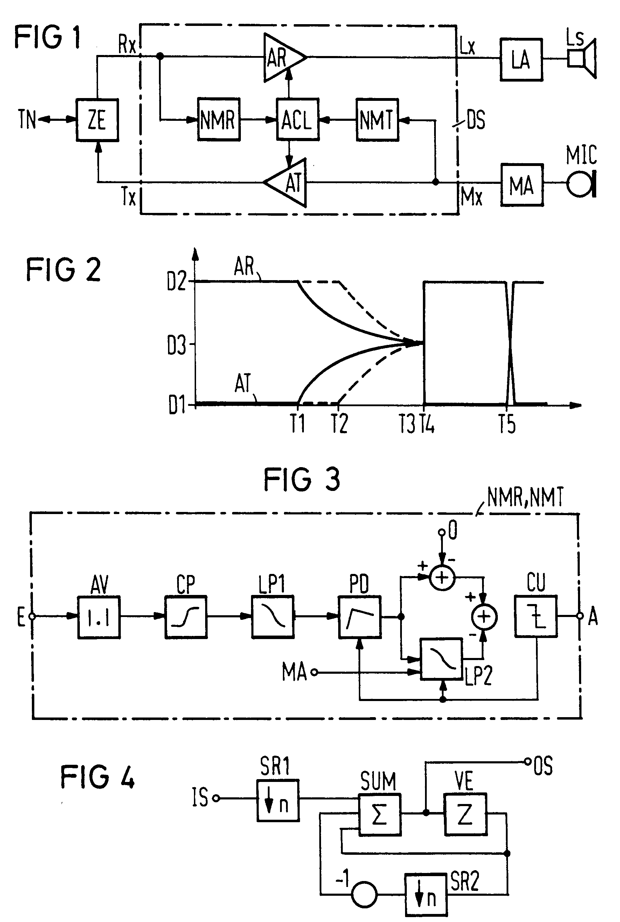

Bei dem Ausführungsbeispiel gemäß FIG 1 werden über eine Fernsprechleitung bidirektional übertragene Signale in einer Zirkulatoreinrichtung ZE in ein Empfangssignal Rx und in ein Sendesignal Tx aufgespalten. Empfangs- und Sendesignal Rx,Tx werden einer erfindungsgemäßen automatischen Sprachrichtungsumschalteinrichtung DS zugeführt bzw. entnommen. Des weiteren ist über eine Lautsprecheranpaßeinrichtung LA ein Lautsprecher LS, dem ein Signal Lx zugeführt wird, und über eine Mikrofonanpaßeinrichtung MA ein Mikrofon MIC, das ein Signal Mx abgibt, an die Sprechrichtungsumschalteinrichtung DS angeschlossen. Die Sprechrichtungsumschalteinrichtung DS weist einen steuerbaren Empfangsabschwächer AR, an dessen Eingang das Empfangssignal Rx angelegt ist und an dessen Ausgang das Signal Lx anliegt, und einen steuerbaren Sendeabschwächer AT, an dessen Eingang das Signal Mx angelegt ist und an dessen Ausgang das Sendesignal Tx anliegt, auf. Zur Steuerung des Empfangs- und Sendeabschwächers AR,AT ist eine Kontroll-Logik ACL vorgesehen, die ihrerseits durch zwei Signal-Geräusch-Detektoren NMR,NMT angesteuert wird. Der eine Signal-Geräusch-Detektor NMR ist dabei mit dem Empfangssignal Rx und der andere Signal-Geräusch-Detektor NMT ist mit dem Signal Mx beaufschlagt. Prinzipiell ist es aber auch möglich, die Signal-Geräusch-Detektoren NMR,NMT mit dem Signal Lx bzw. dem Sendesignal Tx anzusteuern, da das Signal Lx proportional zu dem Empfangssignal Rx bzw. das Sendesignal Tx proportional zu dem Signal Mx ist.

Das erfindungsgemäße Verfahren sieht nun vor, daß das Empfangssignal Rx mit veränderbarer Dämpfung als Signal Lx dem Lautsprecher LS zugeführt wird und daß das Signal Mx ebenfalls mit veränderbarer Dämpfung als Sendesignal Tx Verwendung findet. Das Einstellen der jeweiligen Dämpfung erfolgt in Abhängigkeit von dem Empfangssignal Rx und von dem Signal Mx. Dazu werden beide Signale jeweils fortlaufend als Sprachsignal oder Geräusch klassifiziert. Für den Fall, daß eines der beiden Signale als Sprachsignal klassifiziert worden ist, wird die Dämpfung dieses Signals auf einen ersten Dämpfungswert D1 und das jeweils andere Signal auf einen zweiten Dämpfungswert D2 eingestellt und solange beibehalten, bis das eine Signal wieder als Geräusch klassifiziert wird. Im Falle der Klassifizierung beider Signale als Sprachsignal, werden die Dämpfungen entsprechend dem zuerst als Sprache erkannten Signal eingestellt. Im Falle der Klassifizierung beider Signale als Geräusch, werden beide Dämpfungen auf einen zwischen erstem und zweitem Dämpfungswert liegenden dritten Dämpfungswert eingestellt. Der Übergang von erstem oder zweitem Dämpfungswert D1,D2 auf den dritten Dämpfungswert D3 erfolgt langsamer als ein Übergang von drittem Dämpfungswert D3 auf den ersten oder zweiten Dämpfungswert D1,D2 oder als ein Übergang von erstem Dämpfungswert D1 auf zweiten Dämpfungswert D2 und umgekehrt. Dieser Sachverhalt ist in FIG 2 grafisch dargelegt. Dort wird zunächst das Signal Mx als Sprachsignal und das Empfangssignal Rx als Geräusch klassifiziert. Daher ist die Dämpfung des Signales Rx gleich dem zweiten Dämpfungswert D2 und die Dämpfung des Signales Mx gleich D1, wobei D1 gleich der Dämpfung Null ist. Die Einstellung der Dämpfung erfolgt entsprechend mit dem Empfangsabschwächer für das Empfangssignal Rx und mit dem Sendeabschwächer AT für das Signal MxX. Zu einem Zeitpunkt T1 ändert sich das Signal Mx, so daß beide Signal-Geräusch-Detektoren NMR,NMT nun die entsprechenden Signale Rx,Mx als Geräusche klassifizieren. Der Übergang der Dämpfung von dem Wert D2 zu dem Wert D3 beim Empfangssignal Rx und der Übergang der Dämpfung von dem Wert D1 zu dem Wert D3 bei dem Signal Mx erfolgt stetig bis zu einem Zeitpunkt T3, wo beide Dämpfungswerte bis zu einem Zeitpunkt T4 verbleiben. Zum Zeitpunkt T4 wird nämlich erneut das Signal Mx als Sprachsignal erkannt. Die Dämpfung des Signales Mx wird daraufhin mit steiler Flanke auf den Dämpfungswert D1 und das Empfangssignal Rx auf den Wert D2 gebracht. Im Zeitpunkt T5 ändert sich die Sprechrichtung, so daß sich auch die Dämpfungen entsprechend umkehren.

In Ausgestaltung der Erfindung erfolgt der durch den Signalwechsel zum Zeitpunkt T1 bedingte Übergang der Dämpfungen nach Ablauf einer gegebenen Verzögerungszeit erst zum Zeitpunkt T2, wenn zum Zeitpunkt T1 das Empfangssignal Rx und das Signal Mx als Geräusch klassifiziert werden. Die Zeitdauer des Übergangs kann dabei beibehalten werden oder, wie gezeigt, auch in kürzerer Zeit ablaufen.

Zur Klassifizierung von Empfangssignal Rx und Signal Mx als Sprachsignal oder Geräusch wird zunächst der Betrag des jeweiligen Signals Rx,Mx gebildet und daraufhin eine Amplitudenkompandierung durchgeführt. Nach einer ersten Tiefpaßfilterung mit gegebener Zeitkonstante, einer Spitzenwertdetektion mit zwei alternativen Abklingzeitkonstanten und einer zweiten Tiefpaßfilterung mit zwei alternativen Zeitkonstanten wird ein Vergleich des Signales nach der Spitzenwertdetektion abzüglich eines Offsetsignals mit dem Signal nach der zweiten Tiefpaßfilterung durchgeführt. Die Klassifizierung des Signals als Sprachsignal und damit verbunden, ein Einstellen der größeren Zeitkonstante bei der Spitzenwertdetektion und der zweiten Tiefpaßfilterung resultiert aus dem Überwiegen des Signales nach der Spitzenwertdetektion abzüglich des Offsetsignals gegenüber dem Signal nach der zweiten Tiefpaßfilterung. Im umgekehrten Fall wird das Signal als Geräusch klassifiziert und die kleinere Zeitkonstante bei Spitzenwertdetektion und zweiter Tiefpaßfilterung eingestellt. Ein Verzicht auf Spitzenwertdetektion und Zeitkonstantenumschaltung bei der zweiten Tiefpaßfilterung ist dabei für zahlreiche Anwendungen ebenfalls möglich.

Die Klassifizierung von Sprachsignal und Geräusch beruht darauf, daß Sprachsignale im allgemeinen eine zeitlich stark strukturierte Hüllkurve mit ausgeprägten Amplitudenschwankungen aufweisen und daher annähernd als impulsförmige Signale betrachtet werden können, wahrend es sich bei Geräuschen überwiegend um relativ gleichförmige, stationäre Signale handelt. Um also Impulshaftigkeit von Gleichförmigkeit zu unterscheiden, wird das zu untersuchende Signal zum einen über einen tiefpaßgefilterten Zweig (zweite Tiefpaßfilterung) und zum anderen über einen direkten Zweig, in dem von dem Signal lediglich ein Offsetsignal, bevorzugt ein Gleichsignal, subtrahiert wird, geführt. Impulsförmige Signale werden dabei durch die Tiefpaßfilterung in dem einen Zweig stärker bedämpft als die gleichförmigen. Im zweiten Zweig wird unabhängig von der Signalart vorgegangen. Somit läßt sich beim Vergleich beider Zweige eine Unterscheidung dadurch treffen, daß bei impulsartigen Signalen der erste Zweig einen geringeren Wert liefert als der zweite und umgekehrt bei gleichförmigen Signalen. Durch die vorausgehende Tiefpaßfilterung, wobei kurze Störimpulse durch die Tiefpaßfilterung (erste Tiefpaßfilterung) unterdrückt werden, werden die Signale in ihrer Struktur ausgeprägter und leichter unterscheidbar. Durch die Amplitudenkompandierung wird die Empfindlichkeit bei kleiner Aussteuerung erhöht und damit ein schnelleres Ansprechen des Signal-Geräusch-Detektors erreicht. Eine weitere Verbesserung wird in Weiterbildung der Erfindung durch die Spitzenwertdetektion und die Umschaltung der Zeitkonstanten bei Spitzenwertdetektion und zweiter Tiefpaßfilterung erreicht, indem bei gleichförmigen Signalen eine kleinere Zeitkonstante verwendet wird als bei impulsförmigen Signalen, wodurch ein Wechsel von Geräusch zu Sprachsignal sofort erkannt wird, während beim umgekehrten Fall die Beobachtungszeit länger ist, so daß kleinere Sprechpausen noch nicht zu einem Umschalten führen.

Dazu ist gemäß FIG 3 im vorliegenden Ausführungsbeispiel als Signal-Geräusch Detektor NMR,NMT jeweils ein Gleichrichter AV am Eingang E, dem nachfolgend ein Kompander CP, diesem wiederum nachfolgend ein erster Tiefpaß LP1, daran anschließend ein Spitzenwertdetektor PD mit einstellbarer Zeitkonstante und dem nachgeschaltet ein zweiter Tiefpaß LP2 mit einstellbarer Zeitkonstante vorgesehen. Eine Auswerteschaltung CU am Ausgang A, der das Ausgangssignal des Spitzenwertdetektors PD abzüglich des Offsetsignals O und abzüglich des Ausgangssignals des zweiten Tiefpasses LP2 zugeführt wird, steuert über einen Ausgang die Zeitkonstanten von Spitzenwertdetektor PD und zweitem Tiefpaß LP2.

Die Erfindung weiterbildend ist die Zeitkonstante des ersten Tiefpaßfilters LP1 bei dem Signal-Geräusch-Detektor NMT für das Signal Mx größer als die des ersten Tiefpaßfilters LP1 bei dem Signal-Geräusch-Detektor NMR für das Empfangssignal Rx. Dies hat den Vorteil, daß der störende Einfluß von auf dem Übertragungsweg zwischen Lautsprecher LS und Mikrofon MIC auftretenden Echos verringert wird.

Zudem wird bei dem Signal Mx bzw. bei dem Empfangssignal Rx das Signal vor der zweiten Tiefpaßfilterung auf einen höheren Wert als der augenblickliche Amplitudenwert gesetzt, wenn die Klassifizierung des jeweils anderen Signals, also des Empfangssignals Rx bzw. des Signals Mx von Sprachsignal zu Geräusch wechselt. Ein bevorzugter Wert ist dabei der maximal darstellbare Amplitudenwert. Hierdurch wird vorteilhafterweise eine längere Verzögerungszeit zur Unterdrückung störender Echos erreicht.

Weiterhin ist in Weiterbildung der Erfindung vorgesehen, daß das Offsetsignal O für beide Signal-Geräusch-Detektoren NMR, NMT getrennt einstellbar ist. Im gezeigten Ausführungsbeispiel wird erfindungsgemäß das Offsetsignal O des einen Signal-Geräusch-Detektors für eine bestimmte Zeit größer eingestellt, wenn der andere Signal-Geräusch-Detektor sein Eingangssignal als Sprachsignal klassifiziert hat. Störende Echos werden dadurch noch wirksamer unterdrückt. Weiterhin ist es vorteilhaft, zur Unterdrückung von Störungen nach dem Übergang von Sprache auf Geräusch bei einem Signal-Geräusch-Detektor das Offsetsignal O und/oder den augenblicklichen Amplitudenwert des anderen Signal-Geräusch-Detektors für eine gewisse Zeit festzuhalten.

Bevorzugt wird das erfindungsgemäße Verfahren durch eine zeit- und amplitudendiskrete Signalverarbeitung durchgeführt. Die Vorteile dabei liegen in einer genauen Reproduzierbarkeit ohne Parameterstreuungen, in einer höheren Integrierbarkeit bei geringer externer Beschaltung und in einer höheren Kompatibilität mit digitalen Nachrichtennetzen, wie beispielsweise von ISDN-Systemen (ISDN = Integrated Services Digital Network). Bei dem gezeigten Ausführungsbeispiel sind dabei die Sende- und Empfangssignale Tx,Rx sowie die Signale Mx,Lx digital. Die Mikrofonanpaßeinrichtung MA und die Lautsprecheranpaßeinrichtung sind damit unter anderem zur Analog-Digital- bzw. zur Digital-Analog-Wandlung vorgesehen.

In einem zeit- und amplitudendiskreten System wird eine Tiefpaßfilterung beispielsweise wie folgt ausgeführt: Das zu filternde digitale Signal wird mit einem konstanten Faktor a multipliziert und mit dem gefilterten und um einen Zeitwert, der gleich dem Kehrwert des Arbeitstaktes ist, verzögerten digitalen Signal addiert. Davon wird das mit dem Faktor a multiplizierte gefilterte Signal subtrahiert, welches das Ausgangssignal darstellt. Bevorzugt wird dabei der Faktor a gleich einer n-ten Potenz von 2 gewählt, so daß Multiplikationen durch wesentlich einfacher zu realisierende Schiebeoperationen um n Stellen ersetzt werden können.

Eine schaltungstechnische Realisierung zeigt FIG 4. Das zu filternde Signal IS wird einem ersten Schieberegister SR1 zugeführt und um n Stellen arithmetisch rechts geschoben. Der Ausgang des Schieberegisters SR1 ist auf einen Summierer SUM geführt, der darüber hinaus mit dem Ausgang eines Verzögerungselementes VE und über einen Vorzeichenumkehrer -1 mit dem Ausgang eines zweiten Schieberegisters SR2 verbunden. Der Eingang des zweiten Schieberegisters SR2 ist an den Ausgang des Verzögerungselementes VE angeschlossen und ist zum arithmetischen Rechtsschieben um n Stellen dieses Signales vorgesehen. Das Verzögerungselement VE wird durch den Ausgang des Summierers SUM, der das Ausgangssignal OS führt, angesteuert. Die Zeitkonstante TC einer derartigen Filterstufe errechnet sich abhängig von der Anzahl der geschobenen Stellen n und abhängig von einem Zeitwert DT, der gleich dem Kehrwert des Arbeitstaktes ist, wie folgt:

$$TC = DT/(-\ln(1-a)) \text{ mit } a = 2''$$

Gemäß FIG 2 erfolgt ein Übergang von dem Dämpfungswert D2 zu dem Wert D3 beispielsweise durch fortlaufende Subtraktion des um k Stellen arithmetisch rechtsgeschobenen Augenblickswertes der Dämpfung von dem Augenblickswert bis zum Erreichen des kleineren Dämpfungswertes und ein Übergang von dem Dämpfungswert D1 zu dem Wert D3 durch fortlaufende Addition des um k Stellen arithmetisch rechtsgeschobenen Augenblickswertes bis zum Erreichen des größeren Dämpfungswertes D2 oder D3. Auch hierbei ist es vorteilhaft, daß keine Multiplikationen benötigt werden. Daneben sind jedoch auch andere Realisierungen prinzipiell ebenso möglich.

Das erfindungsgemäße Verfahren gewährleistet, daß in jedem Betriebsfall, insbesondere wenn beide Sprecher aktiv sind, die Schleifenverstärkung kleiner Eins ist. Gegenüber bekannten Schaltungen ist bei dem erfindungsgemäßen Verfahren zur Durchführung jedoch ein erheblich geringerer Schaltungsaufwand als bei bekannten notwendig. Durch den langsamen und kontinuierlichen Übergang auf einen zwischen den beiden Extremwerten liegenden Zwischenwert der Dämpfung wird beim Wechsel von einem Sprechsignal auf ein Geräusch ein angenehmerer Höreindruck erzeugt. Dies wird durch eine zusätzliche Verzögerungszeit zwischen Signalwechsel und Dämpfungsänderung, wenn kein Gegensprecher auftritt, und durch Maßnahmen, die ein Umschalten durch Echos verhindern, weiter verbessert.

**Patentansprüche**

1. Verfahren zur automatischen Sprachrichtungsumschaltung,
   bei dem ein Empfangssignal (Rx) mit veränderbarer Dämpfung einem Lautsprecher (LS) zugeführt wird,
   bei dem ein von einem Mikrofon (MIC) abgegebenes Signal (Mx) mit einer veränderbaren Dämpfung als Sendesignal (Tx) vorgesehen ist,
   bei dem Empfangssignal (Rx) und Mikrofonsignal (Tx) jeweils fortlaufend als Sprachsignal oder Geräusch klassifiziert werden,
   bei dem die Dämpfung jeweils des einen Signals (Rx, Tx), das als Sprachsignal klassifiziert worden ist, auf einen ersten Dämpfungswert (D1) und das jeweils andere Signal (Tx, Rx) auf einen gegenüber dem ersten größeren zweiten Dämpfungswert (D2) eingestellt und so lange beibehalten wird, bis das eine Signal (Rx, Tx) als Geräusch klassifiziert wird,
   bei dem im Falle der Klassifizierung beider Signale als Sprachsignal die vorhergehenden Dämpfungswerte beibehalten werden,
   bei dem im Falle der Klassifizierung beider Signale (Rx, Tx) als Geräusch beide Dämpfungen auf einen zwischen erstem und zweitem Dämpfungswert (D1, D2) liegenden dritten Dämpfungswert (D3) eingestellt werden, und
   bei dem ein Übergang von erstem oder zweitem Dämpfungswert (D1, D2) auf den dritten Dämpfungswert (D3) langsamer erfolgt als ein Übergang von drittem Dämpfungswert (D3) auf den ersten oder zweiten Dämpfungswert (D1, D2) oder ein Übergang von erstem auf zweiten Dämpfungswert (D1, D2) und umgekehrt.

2. Verfahren nach Anspruch 1,
   **dadurch gekennzeichnet**, daß nach einem Wechsel von einem Sprachsignal auf ein Geräusch beim Empfangssignal (Rx) und/oder Mikrofonsignal (Mx) ein Übergang von erstem und/oder zweitem Dämpfungswert (D1, D2) zum dritten (D3) nach Ablauf einer gegebenen Verzögerungszeit erfolgt.

3. Verfahren nach Anspruch 1 oder 2,
   **dadurch gekennzeichnet**, daß zur Klassifizierung von Empfangssignal (Rx) und Mikrofonsignal (Mx) als Sprachsignal oder Geräusch folgende Verfahrensschritte vorgesehen sind:
   - Bildung des Betrags des jeweiligen Signals (Rx, Mx)
   - Amplitudenkompandierung
   - erste Tiefpassfilterung mit gegebener Zeitkonstante
   - zweite Tiefpassfilterung mit gegebener Zeitkonstante
   - Vergleich des Signales vor der zweiten Tiefpassfilterung abzüglich eines einstellbaren Offsetsignals mit dem Signal nach der zweiten Tiefpassfilterung
   - Klassifizierung des Signals als Sprachsignal bei Überwiegen des Signales vor der zweiten Tiefpassfilterung abzüglich des Offsetsignals oder Klassifizierung des Signals als Geräusch bei Überwiegen des Signals nach der zweiten Tiefpassfilterung.

4. Verfahren nach Anspruch 3,
   **dadurch gekennzeichnet**, daß nach der ersten Tiefpassfilterung eine Spitzenwertdetektion mit zwei alternativen Abklingzeitkonstanten durchgeführt wird,
   daß bei der zweiten Tiefpassfilterung zwei alternative Zeitkonstanten vorgesehen sind und
   daß bei Klassifizierung des Signals als Sprachsignal die jeweils größere Zeitkonstante und bei Klassifizierung des Signals als Geräusch die jeweils kleinere Zeitkonstante bei Spitzenwertdetektion und zweiter Tiefpassfilterung eingestellt wird.

5. Verfahren nach Anspruch 3 oder 4,
   **dadurch gekennzeichnet**, daß die gegebene Zeitkonstante der ersten Tiefpassfilterung für das Mikrofonsignal (Mx) größer ist als die für das Empfangssignal (Rx).

6. Verfahren nach Anspruch 3, 4, oder 5,
   **dadurch gekennzeichnet**, daß bei dem Mikrofonsignal (Mx) bzw. bei dem Empfangssignal (Rx) ein interner Zustand bei der zweiten Tiefpassfilterung auf einen Amplitudenwert gesetzt wird, der größer ist als der augenblickliche Amplitudenwert des jeweiligen Signals (Rx, Mx), wenn die Klassifizierung des Empfangssignals (Rx) bzw. des Mikrofonsignals (Mx) von Sprachsignal zu Geräusch wechselt und das jeweilige Signal (Rx, Mx) als Geräusch klassifiziert wird.

7. Verfahren nach Anspruch 6,
   **dadurch gekennzeichnet**, daß der interne Zustand bei der zweiten Tiefpassfilterung auf maximalen Amplitudenwert (MA) gesetzt wird.

8. Verfahren nach einem der Ansprüche 3 bis 7,
   **dadurch gekennzeichnet**, daß das Offsetsignal (O) eines Signal-Geräusch-Detektors (NMT, NMR) angehoben- wird, wenn der andere Signal-Geräusch-Detektor (NMR, NMT) sein Eingangssignal als Sprachsignal klassifiziert.

9. Verfahren nach einem der Ansprüche 6 bis 8,
   **dadurch gekennzeichnet**, daß nach dem Übergang von Sprache auf Geräusch bei einem Signal-Geräusch-Detektor (NMT,NMR) das Offsetsignal (O) und/oder der augenblickliche Amplitudenwert des jeweils anderen Signal-Geräusch-Detektors (NMR,NMT) für eine gegebene Zeit gehalten wird.

10. Verfahren nach einem der Ansprüche 1 bis 9,
    **gekennzeichnet durch** eine zeit- und amplitudendiskrete Signalverarbeitung.

11. Verfahren nach Anspruch 3 und 10,
    **dadurch gekennzeichnet,** daß bei mindestens einer Tiefpassfilterung das zu filternde zeit- und amplitudendiskrete Signal mit einem gegebenen Faktor multipliziert und zu dem verzögerten gefilterten zeit- und amplitudendiskreten Signal addiert wird und daß davon das mit dem gegebenen Faktor multiplizierte und verzögerte gefilterte Signal subtrahiert wird.

12. Verfahren nach Anspruch 11,
    **dadurch gekennzeichnet,** daß der gegebene Faktor gleich einer n-ten Potenz von 2 ist und daß anstelle der Multiplikationen Schiebeoperationen um n Stellen vorgesehen sind.

13. Verfahren nach Anspruch 1 und 11,
    **dadurch gekennzeichnet,** daß ein Übergang von dem zweiten Dämpfungswert (D2) zu dem dritten (D3) durch fortlaufende Subtraktion des um k Stellen arithmetisch rechtsgeschobenen Augenblickswerts der Dämpfung von dem Augenblickswert bis zum Erreichen des dritten Dämpfungswertes (D3) erfolgt und daß ein Übergang von dem ersten Dämpfungswert (D1) zu dem dritten (D3) durch fortlaufende Addition des um k Stellen arithmetisch rechtsgeschobenen Augenblickswerts bis zum Erreichen des dritten Dämpfungswerts (D3) erfolgt.

14. Schaltungsanordnung zur Durchführung des Verfahrens nach einem der Ansprüche 1 bis 13,
    **gekennzeichnet durch** einen steuerbaren Empfangsabschwächer(AR), an dessen Eingang das Empfangssignal (Rx) angelegt ist und an dessen Ausgang ein zur Ansteuerung des Lautsprechers (LS) vorgesehenes Signal (Lx) anliegt,
    durch einen steuerbaren Sendeabschwächer (AT), an dessen Eingang das Mikrofonsignal (Mx) angelegt ist und an dessen Ausgang das Sendesignal (Tx) anliegt,
durch zwei Signal-Geräusch-Detektoren (NMR, NMT), von denen dem einen (NMR) das Empfangssignal (Rx) oder das Lautsprechersignal (Lx) und dem anderen (NMT) das Mikrofonsignal (Mx) oder das Sendesignal (Tx) zugeführt wird, und
mit einer den Signal-Geräusch-Detektoren (NMR, NMT) nachgeschalteten Kontrollogik (ACL) zur Steuerung des Empfangs- und Sendeabschwächers (AR, AT).

15. Schaltungsanordnung nach Anspruch 14,
**dadurch gekennzeichnet,**
daß die Signal-Geräusch-Detektoren (NMR, NMT) jeweils aus einem Gleichrichter (AV) am Eingang (E) einem dem Gleichrichter (AV) nachgeschalteten Kompander (CP), einem dem Kompander (CP) nachgeschalteten ersten Tiefpass (LP1), einem dem ersten Tiefpass (LP1) nachgeschalteten zweitem Tiefpass (LP2) und einer Auswertschaltung (CU) am Ausgang (A), der das Eingangssignal des zweiten Tiefpassess (LP2) abzüglich des steuerbaren Offsetsignals (O) und abzüglich des Ausgangssignals des zweiten Tiefpasses (LP2) zugeführt wird.

16. Schaltungsanordnung nach Anspruch 15,
**dadurch gekennzeichnet,**
daß dem ersten Tiefpass (LP1) ein Spitzenwertdetektor mit einstellbarer Abklingzeitkonstante (PD) nach geschaltet ist,
daß die Zeitkonstante des zweiten Tiefpassfilters (LP2) einstellbar ist, und daß die Steuereingänge von Spitzenwertdetektor (PD) und zweitem Tiefpass (LP2) zur Zeitkonstanteneinstellung mit der Auswerteschaltung (CU) verbunden sind.

## Claims

1. Method for the automatic reversal of the speech direction, in which a received signal (Rx) is supplied with variable attenuation to a loudspeaker (LS), in which a signal (Mx), emitted by a microphone (MIC) and having a variable attenuation, is provided as transmitted signal (Tx), in which received signal (Rx) and microphone signal (Tx) are in each case continuously classified as speech signal or noise, in which the attenuation of in each case the one signal (Rx, Tx) which has been classified as speech signal is set to a first attenuation value (D1) and the in each case other signal (Tx, Rx) is set to a second attenuation value (D2) which is greater than the first one and is retained until one signal (Rx, Tx) is classified as noise, in which, when both signals are classified as speech signal, the preceding attenuation values are retained, in which, when both signals (Rx, Tx) are classified as noise, both attenuations are set to a third attenuation value (D3) which is between the first and second attenuation value (D1, D2), and in which a transition from the first or second attenuation value (D1, D2) to the third attenuation value (D3) takes place more slowly than a transition from the third attenuation value (D3) to the first or second attenuation value (D1, D2) or a transition from the first to the second attenuation value (D1, D2) and conversely.

2. Method according to Claim 1, characterized in that, after a change from a speech signal to a noise in the received signal (Rx) and/or microphone signal (Mx), a transition from the first and/or second attenuation value (D1, D2) to the third one (D3) takes place after a given delay time has elapsed.

3. Method according to Claim 1 or 2, characterized in that, for the classification of received signal (Rx) and microphone signal (Mx) as speech signal or noise, the following method steps are provided:
   - forming the absolute value of the respective signal (Rx, Mx)
   - amplitude companding
   - first low-pass filtering with a given time constant
   - second low-pass filtering with a given time constant
   - comparing the signal before the second low-pass filtering minus an adjustable offset signal with the signal after the second low-pass filtering
   - classifying the signal as speech signal when the signal before the second low-pass filtering minus the offset signal predominates or classifying the signal as noise when the signal after the second low-pass filtering predominates.

4. Method according to Claim 3, characterized in that, after the first low-pass filtering, a peak-value detection is carried out with two alternative decay time constants, in that, during the second low-pass filtering, two alternative time constants are provided, and in that, when the signal is classified as speech signal, the in each case greater time constant and, when the signal is classified as noise, the in each case smaller time constant is set in the peak-value detection and second low-pass filtering.

5. Method according to Claim 3 or 4, characterized in that the given time constant of the first low-pass filtering for the microphone signal (Mx) is greater than that for the received signal (Rx).

6. Method according to Claim 3, 4 or 5, characterized in that, in the case of the microphone signal (Mx) and, respectively, in the case of the received signal (Rx), an internal state in the second low-pass filtering is set to an amplitude value which is greater than the instantaneous amplitude value of the respective signal (Rx, Mx) when the classification of the received signal (Rx) and, respectively, of the microphone signal (Mx) changes from speech signal to noise and the respective signal (Rx, Mx) is classified as noise.

7. Method according to Claim 6, characterized in that the internal state in the second low-pass filtering is set to the maximum amplitude value (MA).

8. Method according to one of Claims 3 to 7, characterized in that the offset signal (O) of a signal/noise detector (NMT, NMR) is raised when the other signal/noise detector (NMR, NMT) classifies its input signal as speech signal.

9. Method according to one of Claims 6 to 8, characterized in that, after the transition from speech to noise in a signal/noise detector (NMT, NMR), the offset signal (O) and/or the instantaneous amplitude value of the in each case other signal/noise detector (NMR, NMT) is held for a given time.

10. Method according to one of Claims 1 to 9, characterized by time- and amplitude-discrete signal processing.

11. Method according to Claims 3 and 10, characterized in that, in at least one low-pass filtering, the time- and amplitude-discrete signal to be filtered is multiplied by a given factor and added to the delayed filtered time- and amplitude-discrete signal and in that the filtered signal multiplied by the given factor and delayed is subtracted therefrom.

12. Method according to Claim 11, characterized in that the given factor is equal to an nth power of 2 and in that, instead of the multiplications, shift operations by n digits are provided.

13. Method according to Claims 1 and 11, characterized in that a transition from the second attenuation value (D2) to the third one (D3) takes place by continuous subtraction of the instantaneous value of the attenuation, arithmetically right-shifted by k digits, from the instantaneous value until the third attenuation value (D3) is reached, and in that a transition from the first attenuation value (D1) to the third one (D3) takes place by continuous addition of the instantaneous value, arithmetically right-shifted by k digits, until the third attenuation value (D3) is reached.

14. Circuit arrangement for carrying out the method according to one of Claims 1 to 13, characterized by a controllable receive attenuator (AR), to the input of which the received signal (Rx) is applied and at the output of which a signal (Lx) intended for driving the loudspeaker (LS) is present, by a controllable transmit attenuator (AT), to the input of which the microphone signal (Mx) is applied and at the output of which the transmit signal (Tx) is present, by two signal/noise detectors (NMR, NMT), one of which (NMR) is supplied with the received signal (Rx) or the loudspeaker signal (Lx) and the other one of which (NMT) is supplied with the microphone signal (Mx) or the transmit signal (Tx), and having a control logic (ACL) following the signal/noise detectors (NMR, NMT) for controlling the receive and transmit attenuator (AR, AT).

15. Circuit arrangement according to Claim 14, characterized in that the signal/noise detectors (NMR, NMT) in each case consist of a rectifier (AV) at the input (E), a compander (CP) following the rectifier (AV), a first low-pass filter (LP1) following the compander (CP), a second low-pass filter (LP2) following the first low-pass filter (LP1) and an evaluating circuit (CU) at the output (A), which is supplied with the input signal of the second low-pass filter (LP2) minus the controllable offset signal (O) and minus the output signal of the second low-pass filter (LP2).

16. Circuit arrangement according to Claim 15, characterized in that the first low-pass filter (LP1) is followed by a peak-value detector with an adjustable decay time constant (PD), in that the time constant of the second low-pass filter (LP2) is adjustable, and in that the control inputs of the peak-value detector (PD) and the second low-pass filter (LP2) are connected to the evaluating circuit (CU) for adjusting the time constants.

**Revendications**

1. Procédé de commutation automatique de la direction de signaux vocaux, selon lequel
un signal de réception (Rx) est envoyé, avec un affaiblissement variable, à un haut-parleur (LS),
un signal (Mx), délivré par un microphone (MIC) et possédant un affaiblissement variable, est prévu en tant que signal d'émission (Tx),
le signal de réception (Rx) et le signal (Tx) du microphone sont classés respectivement de façon continue en tant que signal vocal ou bruit,
l'affaiblissement respectivement d'un signal (Rx,Tx), qui a été classé en tant que signal vocal, est réglé sur une première valeur d'affaiblissement (D1), et l'autre signal respectif (Tx,Rx) est réglé sur une seconde valeur d'affaiblissement (D2) supérieure la première et cet état est maintenu jusqu'à ce qu'un signal (Rx,Tx) soit classé en tant que bruit,
les valeurs d'affaiblissement précédentes sont conservées dans le cas du classement des deux signaux en tant que signal vocal,
les deux affaiblissement sont réglés sur une troisième valeur d'affaiblissement (D3) située entre les première et seconde valeurs d'affaiblissement (D1,D2), dans le cas du classement des deux signaux (Rx,Tx) en tant que bruit, et
le passage de la première ou de la seconde valeur d'affaiblissement (D1,D2) à la troisième valeur d'affaiblissement (D3) s'effectuant plus lentement que le passage de la troisième valeur d'affaiblissement (D3) à la première ou à la seconde valeur d'affaiblissement (D1,D2) ou que le passage de la première à la seconde valeur d'affaiblissement (D1,D2) et inversement.

2. Procédé suivant la revendication 1, caractérisé par le fait qu'après le changement d'un signal vocal à un bruit dans le cas du signal de réception (Rx) et/ou du signal de microphone (Mx), il se produit une commutation de la première et/ou de la seconde valeur d'affaiblissement (D1,D2) à la troisième valeur d'affaiblissement (D3) après l'écoulement d'un retard donné.

3. Procédé suivant la revendication 1 ou 2, caractérisé par le fait que pour le classement du signal de réception (Rx) et du signal (Mx) du microphone en tant que signal vocal ou bruit, on prévoit les étapes opératoires suivantes :
   - formation de la valeur absolue du signal respectif (Rx, Mx),
   - compression-dilatation d'amplitude,
   - premier filtrage passe-bas avec une constante de temps donnée,
   - second filtrage passe-bas avec une constante de temps donnée,
   - comparaison du signal avant le second filtrage passe-bas, diminué d'un signal de décalage réglable, au signal obtenu après le second filtrage passe-bas,
   - classement du signal en tant que signal vocal lorsque dans le cas de la prépondérance du signal présent avant le second filtrage passe-bas, déduction faite du signal de décalage, ou classement du signal en tant que bruit lors de la prépondérance du signal obtenu après le second filtrage passe-bas.

4. Procédé suivant la revendication 3, caractérisé par le fait
qu'après le premier filtrage passe-bas, on exécute une détection de valeur maximale avec deux constantes alternatives de diminution,
que pour le second filtrage passe-bas, on prévoit deux constantes de temps alternatives, et
que lors du classement du signal en tant que signal vocal, on règle la constante de temps respective la plus élevée et,
lors du classement du signal en tant que bruit, on règle la constante de temps respective la plus faible pour la détection de valeur maximale et pour le second filtrage passe-bas.

5. Procédé suivant la revendication 3 ou 4, caractérisé par le fait que la constante de temps donnée du premier filtrage passe-bas est plus élevée pour le signal (Mx) du microphone que pour le signal de réception

EP 0 423 537 B1

(Rx).

6. Procédé suivant la revendication 3, 4 ou 5, caractérisé par le fait que dans le cas du signal (Mx) du microphone ou dans le cas du signal de réception (Rx), on règle un état interne dans le cas du second filtrage passe-bas, sur une valeur d'amplitude, qui est supérieure à la valeur d'amplitude instantanée du signal respectif (Rx, Mx), lorsque le classement du signal de réception (Rx) ou du signal (Mx) du microphone est commuté du signal vocal au bruit et que le signal respectif (Rx,Mx) est classé en tant que bruit.

7. Procédé suivant la revendication 6, caractérisé par le fait que lors du second filtrage passe-bas, l'état interne est positionné sur la valeur d'amplitude maximale (MA).

8. Procédé suivant l'une des revendications 3 à 7, caractérisé par le fait que le signal d'offset (O) d'un détecteur de signal/bruit (NMT, NMR) est supprimé lorsque l'autre détecteur de signal/bruit (NMR, NMT) classe son signal d'entrée en tant que signal vocal.

9. Procédé suivant l'une des revendications 6 à 8, caractérisé par le fait qu'après le passage d'un signal vocal à un bruit dans un détecteur signal/bruit (NMT,NMR), le signal d'offset (O) et/ou la valeur instantanée d'amplitude de l'autre détecteur respectif de signal/bruit (NMR,NMT) est bloqué pendant un intervalle de temps donné.

10. Procédé suivant l'une des revendications 1 à 9, caractérisé par un traitement des signaux discret dans le temps et en amplitude.

11. Procédé suivant l'une des revendications 3 et 10, caractérisé par le fait que dans le cas d'au moins un filtrage passe-bas, le signal devant être filtré, qui est discret du point de vue temps et amplitude, est multiplié par un facteur donné et est ajouté au signal filtré et retardé, qui est discret du point de vue temps et amplitude, et que le signal multiplié par le facteur donné et retardé et filtré est soustrait du signal obtenu.

12. Procédé suivant la revendication 11, caractérisé par le fait que le facteur donné est égal à une puissance n de 2 et qu'à la place des multiplications, on prévoit des opérations de décalage sur n chiffres.

13. Procédé suivant l'une des revendications 1 à 11, caractérisé par le fait qu'un passage de la seconde valeur d'affaiblissement (D2) à la troisième valeur d'affaiblissement (D3) s'effectue par soustraction continue de la valeur instantanée de l'affaiblissement, décalée arithmétiquement vers la droite de k chiffres, à partir de la valeur instantanée jusqu'à l'obtention de la troisième valeur d'affaiblissement (D3) et qu'un passage de la première valeur d'affaiblissement (D1) à la troisième valeur d'affaiblissement (D3) s'effectue au moyen d'une addition continue de la valeur instantanée, décalée relativement vers la droite de k chiffres, jusqu'à l'obtention de la troisième valeur d'affaiblissement (D3).

14. Montage pour la mise en oeuvre du procédé suivant l'une des revendications 1 à 13, caractérisé par un atténuateur commandable de réception (AR), à l'entrée duquel est appliqué le signal de réception (Rx) et sur la sortie duquel est présent un signal (Lx) prévu pour la commande du haut-parleur (LS),
un atténuateur commandable d'émission (AT), à l'entrée duquel est appliqué le signal de microphone (Ma) et sur la sortie duquel est présent le signal d'émission (Tx),
deux détecteurs de signal/bruit (NMR,NMT), à l'un (NMR) desquels est envoyé le signal de réception (Rx) ou le signal de haut-parleur (Lx) et à l'autre (NMT) desquels est envoyé le signal (Mx) du microphone ou le signal d'émission (Tx), et comportant une logique de commande (ACL) branchée en aval des détecteurs de signal/bruit (NMR,NMT) et servant à commander l'atténuateur de réception et l'atténuateur d'émission (AR,AT).

15. Montage suivant la revendication 14, caractérisé par le fait que les détecteurs de signal/bruit (NMR,NMT) sont constitués chacun par un redresseur (AV) raccordé à l'entrée (E), un dispositif de compression-dilatation (CP) branché en aval du redresseur (AV), un premier filtre passe-bas (LP) branché en aval du dispositif de compression-dilatation (CP), un second filtre passe-bas (LP2) branché en aval du premier filtre passe-bas (LP), et un circuit d'évaluation (CU) raccordé à la sortie (A) et auquel est envoyé le signal d'entrée du second filtre passe-bas (LP2), diminué du signal d'offset commandable (O) et du signal de sortie du second filtre passe-bas (LP2).

16. Montage suivant la revendication 15, caractérisé par le fait

EP 0 423 537 B1

qu'un détecteur de valeur maximale possédant une constante d'affaiblissement réglable (PD) est branché en aval du premier filtre passe-bas (LP),
que la constante de temps du second filtre passe-bas (LP2) est réglable, et
que les entrées de commande du détecteur de valeur maximale (PD) et du second filtre passe-bas (LP2) sont reliées, pour le réglage de la constante de temps, au circuit d'évaluation (CU).

FIG 1

FIG 2

FIG 3

FIG 4